(19) Europäisches Patentamt

European Patent Office

Office européen des brevets

(11) EP 0 587 985 B1

(12) EUROPÄISCHE PATENTSCHRIFT

(45) Veröffentlichungstag und Bekanntmachung des Hinweises auf die Patenterteilung:
23.10.1996 Patentblatt 1996/43

(51) Int Cl.⁶: **G02B 21/36**, G02B 21/16, G03B 7/08, G03B 7/091

(21) Anmeldenummer: 93107424.9

(22) Anmeldetag: 07.05.1993

(54) **Verfahren und Vorrichtung zur Belichtungssteuerung für die Fluoreszenzmikrofotografie**

Method and apparatus for the controle of illumination for fluorescence micro-photography

Procédé et dispositif pour la contrôle d'illumination pour la micro photographie en fluorescence

(84) Benannte Vertragsstaaten:
CH DE FR GB LI

(30) Priorität: 14.09.1992 DE 4230724

(43) Veröffentlichungstag der Anmeldung:
23.03.1994 Patentblatt 1994/12

(73) Patentinhaber: LEICA MIKROSKOPIE UND SYSTEME GmbH
D-35530 Wetzlar (DE)

(72) Erfinder: Hermann, Frank
W-5900 Siegen (DE)

(74) Vertreter: Stamer, Harald, Dipl.-Phys.
c/o Leica Industrieverwaltung GmbH,
Konzernstelle Patente + Marken,
Postfach 20 20
35530 Wetzlar (DE)

(56) Entgegenhaltungen:
DE-A- 3 627 354

• PATENT ABSTRACTS OF JAPAN vol. 017, no. 163 (P-1513)30. März 1993 & JP-A-04 326 316 (OLYMPUS) 16. November 1992
• PATENT ABSTRACTS OF JAPAN vol. 016, no. 355 (P-1394)30. Juli 1992 & JP-A-04 107 418 (OLYMPUS) 8. April 1992
• PATENT ABSTRACTS OF JAPAN vol. 02, no. 154 (E-80)25. Dezember 1978 & JP-A-53 122 471 (OLYMPUS) 25. Oktober 1978
• JENAER RUNDSCHAU Nr. 2 , 1983 , JENA Seiten 79 - 81 H.STORTZ 'anmerkungen zur fluoreszenzmikrofotografie'

**Beschreibung**

Die Erfindung betrifft ein Verfahren zur Belichtungssteuerung für die Fluoreszenzmikrofotografie und eine Vorrichtung zur Durchführung des erfindungsgemäßen Verfahrens.

Zur Messung der Belichtungszeit für mikrofotografische Aufnahmen wird das Licht des mikroskopischen Bildes oder ein Teil des Lichtes auf einen Sensor umgelenkt. Dazu sind im wesentlichen zwei Verfahren bekannt. Beim ersten wird vor der Belichtung ein Klappspiegel in den Strahlengang geschwenkt, der das Licht auf den Sensor lenkt; bei der Belichtung wird der Klappspiegel - ähnlich wie bei einer Spiegelreflexkamera - aus dem Strahlengang ausgeschwenkt. Bei diesem Verfahren gelangt jeweils die maximale Lichtmenge auf den Film oder den Sensor. Das andere Verfahren verwendet einen Strahlenteiler zwischen Sensor und Filmebene, wobei ein bestimmtes Teilerverhältnis realisiert ist. Die Lichtintensität kann hier während der Belichtung ständig gemessen werden.

In der Fluoreszenzmikroskopie tritt, bedingt durch das Auftreffen ultravioletter Strahlung auf das Präparat unter Aussendung von sichtbarem Licht, mitunter ein Ausbleichen des Präparates auf, das sog. "Fading" oder der Fading-Effekt, der eine Korrektur der Belichtungszeit erfordert. Diese ist beim obengenannten ersten Verfahren nicht möglich. Beim zweiten Verfahren kann diese Korrektur während des Belichtungsvorganges mittels des Strahlenteilers erfolgen, der jedoch entsprechend dem Teilerverhältnis nur einen Teil der zur Verfügung stehenden Lichtmenge auf den Film gelangen läßt. Dementsprechend sind hierbei lange Belichtungszeiten erforderlich; außerdem wird die Abbildungsleistung durch den Strahlenteiler gemindert.

Aus der WO 88/00714 ist ein Verfahren zum Fotografieren mikroskopischer Objekte sowie eine entsprechende Vorrichtung bekannt, wonach die beiden genannten Verfahren alternativ angewandt werden können. Dazu ist im Fotostrahlengang ein Strahlenteilersystem mit Teilerflächen unterschiedlichen Transmissions-/Reflexionsverhältnisses und einer zusätzlichen Vollverspiegelungsfläche querverschieblich angeordnet und im Meßstrahlengang vor dem Lichtempfänger ein Drehspiegel vorgesehen. Mit dieser bekannten Anordnung kann sowohl das Fotografieren mit verkürzten Belichtungszeiten als auch wahlweise die Belichtungskorrektur während der Aufnahme durchgeführt werden. Eine bei fluoreszenzmikroskopischen Aufnahmen erwünschte Fadingkorrektur bei maximaler Lichtintensität und damit kurzen Belichtungszeiten ist mit dieser Anordnung nicht realisierbar.

Der Erfindung liegt die Aufgabe zugrunde, ein Verfahren der eingangs genannten Art anzugeben, das beim Auftreten eines Ausbleichens des Präparates eine kurze und dennoch korrekte Belichtung bei voller Lichtintensität ermöglicht und ferner, eine für das Verfahren geeignete Vorrichtung zur Verfügung zu stellen.

Erfindungsgemäß wird diese Aufgabe durch die Merkmale der Ansprüche 1 und 4 gelöst. Vorteilhafte Weiterbildungen ergeben sich aus den Unteransprüchen 2 und 3.

Das genannte "Fading" unterliegt bekannten Gesetzen, so daß die Intensitätsabnahme des Lichtes nicht ständig gemessen werden muß. Für die meisten Anwendungen reichen zur Bestimmung des Fading-Verlaufes zwei zeitversetzte Messungen der Intensität aus. Setzt man voraus, daß die Lichtintensität nach der Formel

$$I_{(t)} = I_{(o)} \times \exp^{(-t/\tau)}$$

abnimmt, in der $I_{(t)}$ die Gesamtintensität, $I_{(o)}$ die Anfangsintensität, t die Zeit und $\tau$ eine Zeitkonstante bedeuten, so ist in der Formel $I_{(o)}$ und $\tau$ unbekannt. Der gesamte Zeitverlauf der Intensitätsabnahme kann daher durch die Messung zweier Werte, nämlich $I_1$ und $I_2$ mit dem Zeitabstand $T_1$, bestimmt werden. Auf diese Weise kann auch die Belichtung

$$\Phi_1 = \int_0^{T_1} I(t)dt$$

mittels der Werte $I_1$, $I_2$ und $T_1$ errechnet werden.

Durch Intensitätsmessung vor und nach dem ersten Belichtungsvorgang ist bei dem oben genannten Fadingverlauf die wirkliche Belichtung $\Phi_1$ ermittelbar, die kürzer als die Sollbelichtung $\Phi_{soll}$ ist. Da der weitere Verlauf des Fading gleichfalls bekannt ist, kann eine zweite Belichtungszeit $T_2$ ermittelt werden, so daß gilt: $\Phi_1 + \Phi_2 = \Phi_{soll}$. $T_2$ ist dabei eine Funktion von $I_1$, $I_2$ und $T_1$, d.h. $T_2 = F(I_1, I_2, T_1)$. Da die Meßzeit selbst wesentlich kleiner als die Belichtungszeit ist, kann erste vernachlässigt werden.

Die Zeichnung dient zur näheren Erläuterung der Erfindung.

Es zeigen ein

Fig. 1    Intensitäts-Zeit-Diagramm des erfindungsgemäßen Verfahrens und

Fig. 2    ein Blockbild der erfindungsgemäßen Vorrichtung.

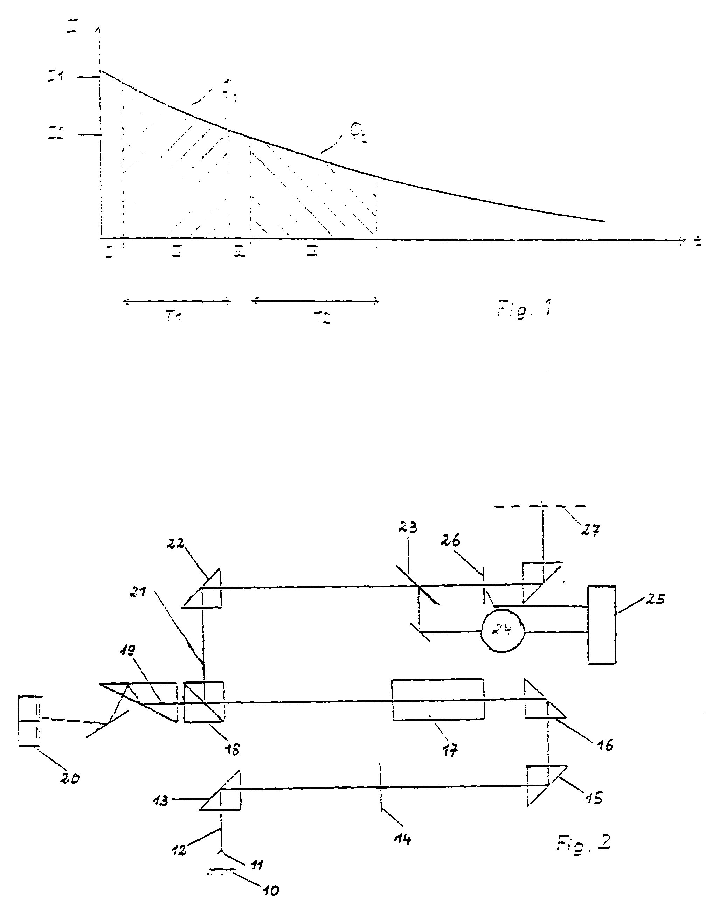

Entsprechend Fig. 1 ergibt sich ein Belichtungsverlauf, in welchem

I. eine erste Belichtungszeit $T_1$ gemessen,

II. mit der Zeit $T_1$ belichtet,

III. die Intensität $I_2$ nach der ersten Belichtung gemessen und

IV. die Belichtung mit der errechneten Zeit $T_2$ vorgenommen wird.

Auf diese Weise gelangt die maximale Lichtmenge sowohl auf den Sensor als auch den Film, und eine Fadingkorrektur ist gleichfalls möglich. Durch das Fehlen des Strahlenteilers tritt kein Lichtverlust auf, und eine damit verbundene Minderung der Abbildungsqualität ist gleichfalls eliminiert.

In Fig. 2 ist die erfindungsgemäße Vorrichtung in einem Ausführungsbeispiel anhand einer schematischen Darstellung eines an sich bekannten Fototubus gezeigt. Von einem zu untersuchenden Objekt 10 geht ein Strahlengang 11 mit einer optischen Achse 12 aus. Nach Umlenkung mittels eines Prismas 13 wird in einer Zwischenbildebene 14 ein Zwischenbild des Objekts 10 entworfen, in der beispielsweise eine nicht gezeigte Strichplatte angeordnet sein kann. Der Strahlengang 11 tritt nach zweimaliger Umlenkung durch die Prismen 15,16 durch eine Zoom-Optik 17, die beispielsweise durch ein bildumlenkendes Tubuslinsensystem realisiert sein kann. Im Strahlengang 11 folgt auf die Zoom-Optik 17 ein Strahlenteiler 18 mit einstellbaren Teilungsverhältnissen. Dieser teilt den Strahlengang 11 in einen Teilstrahlengang 19 für die Beobachtung mittels eines Binotubus 20 und einen Fotostrahlengang 21 auf. Letzterer wird durch das Prisma 22 umgelenkt und trifft auf einen Klappspiegel 23. Für die Messung lenkt dieser das gesamte Licht des Fotostrahlenganges 21 auf einen Sensor 24, der die Intensitäten mißt. Mittels eines Zentralprozessors 25 werden diese ausgelesen und die entsprechenden Belichtungszeiten berechnet. Der Klappspiegel 23 wird ebenso wie ein Verschluß 26 vom Zentralprozessor 24 gesteuert, so daß beim Ausschwenken des Klappspiegels 23 das gesamte Licht des Fotostrahlenganges auch auf den Film 27 gelangt.

Es versteht sich, daß für den Zeitverlauf des Fading-Effektes auch andere Funktionstypen vorliegen können. Eine exakte Bestimmung der Nachbelichtungszeit $T_2$ ist dann nicht mehr möglich, da diese Funktionstypen durch Messung an einzelnen Stellen nicht unterscheidbar sind und die Funktionen mehr als zwei Parameter aufweisen. Durch Untersuchung der Belichtungen $\Phi_2$ als Funktionen von $I_1, I_2$, $T_1$ und $T_2$ für die jeweiligen Funktionstypen kann indessen ein optimierter Zusammenhang zur Berechnung von $T_2$ ausgewählt werden. Wenngleich die so ermittelte zweite Belichtungszeit nur eine Näherung darstellt, reicht diese jedoch für eine richtige Belichtung aus.

**Patentansprüche**

1. Verfahren zur Steuerung der Belichtungszeit von fotografischem Material für die Fluoreszenzmikrofotografie, wobei

   die Intensität (I) des Belichtungslichts aus dem zu fotografierenden Objekt (10) vor und nach einem ersten Belichtungsvorgang des fotografischen Materials (27) mittels eines Lichtsensors (24) gemessen wird,
   die vor dem ersten Belichtungsvorgang gemessene erste Intensität ($I_1$) zur Ermittlung der Dauer ($T_1$) des ersten Belichtungsvorgangs benutzt wird,
   die nach dem ersten Belichtungsvorgang gemessene zweite Intensität ($I_2$) zusammen mit der ersten gemessenen Intensität ($I_1$) und der Dauer ($T_1$) des ersten Belichtungsvorgangs zur Ermittlung der Lichtmenge, mit der das fotografische Material im ersten Belichtungsvorgang beaufschlagt wurde, und, gegebenenfalls, zur Ermittlung der Dauer ($T_2$) eines zweiten Belichtungsvorgangs benutzt wird,
   ein Umlenkspiegel (23) in den Strahlengang (21) zwischen dem zu fotografierenden Objekt (10) und dem fotografischen Material (27) eingeschwenkt wird, um das Belichtungslicht aus dem Objekt (10) in den Lichtsensor (24) einzuspiegeln, so daß die volle Lichtintensität aus dem Objekt (10) wahlweise zur Intensitätsmessung oder zur Belichtung des fotografischen Materials benutzt wird.

2. Verfahren nach Anspruch 1, wobei der zweite Belichtungsvorgang ($T_2$) ausgelöst wird, wenn das Verhältnis $I_2/I_1$ der zweiten gemessenen Intensität zur ersten gemessenen Intensität zwischen 0,2 und 0,8 beträgt.

3. Verfahren nach Anspruch 1, wobei zur Berechnung der Belichtungszeiten ($T_1$, $T_2$) der Schwarzschildexponent des fotografischen Materials berücksichtigt wird.

4. Vorrichtung zur Steuerung der Belichtungszeit von fotografischem Material in einem Apparat für Fluoreszenzmikrofotografie, bestehend aus

   einem im Strahlengang (21) zwischen dem zu fotografierenden Objekt (10) und dem zu belichtenden fotografischen Material angeordneten Verschluß (26),
   einem Lichtsensor (24) und einem in den Strahlengang (21) zwischen dem zu fotografierenden Objekt (10) und dem Verschluß (26) einschwenkbaren Umlenkspiegel (23), um das Belichtungslicht aus dem Objekt (10) in den Lichtsensor (24) einzuspiegeln, so daß die volle Lichtintensität aus dem Objekt (10) wahlweise zur Intensitätsmessung durch den Lichtsensor (24) oder zur Belichtung des fotografischen Materials benutzt werden kann, und
   einem Zentralprozessor (25) zum Auslesen der vom Lichtsensor (24) gemessenen Intensitäten ($I_1$, $I_2$), zur Steuerung des Verschlusses (26) und der Position des Umlenkspiegels (23) und zur Berechnung der Belichtungszeiten (T , $T_2$)

gemäß dem Verfahren nach Anspruch 1.

**Claims**

1. Method for the control of the exposure time of photographic material for the fluorescence microphotography, wherein

the intensity (I) of the exposure light from the object (10) to be photographed is measured by means of a light sensor (24), before and after a first exposure operation of the photographic material (27), the first intensity ($I_1$) measured before the first exposure operation is used for ascertaining the duration ($T_1$) of the first exposure operation, the second intensity ($I_2$) measured after the first exposure operation together with the first measured intensity ($I_1$) and the duration ($T_1$) of the first exposure operation are used for ascertaining the quantity of light, by which the photographic material was acted on in the first exposure operation and, in a given case for ascertaining the duration ($T_2$) of a second exposure operation, a deflecting mirror (23) is pivoted into the ray path (21) between the object (10) to be photographed and the photographic material (27) in order to reflect the exposure light from the object (10) into the light sensor (24) so that the full light intensity from the object (10) is utilised selectably for the intensity measurement or the exposure of the photographic material.

2. Method according to claim 1, wherein the second exposure operation ($T_2$) is initiated when the ratio $I_2/I_1$ of the second measured intensity to the first measured intensity amountsto between 0.2 and 0.8.

3. Method according to claim 1, wherein the black shield exponent of the photographic material is taken into consideration for the computation of the exposure times ($T_1$, $T_2$).

4. Device for the control of the exposure time of photographic material in an apparatus for fluorescence microphotography, the device consisting of

a shutter (26) arranged in the ray path (21) between the object (10) to be photographed and the photographic material to be exposed, a light sensor (24) and a deflecting mirror (23), which is pivotable into the ray path (21) between the object (10) to be photographed and the shutter (26) in order to reflect the exposure light from the object (10) into the light sensor (24) so that the full light intensity from the object (10) is utilised selectably for the intensity measurement by the light sensor (24) or for the exposure of the photographic material, and a central processor (25) for reading out the intensities ($I_1$, $I_2$) measured by the light sensor (24), for the control of the shutter (26) and the position of the deflecting mirror (23) and for the computation of the exposure times ($T_1$, $T_2$) by the method according to claim 1.

**Revendications**

1. Procédé pour le contrôle du temps d'exposition d'un matériel photographique pour la microphotographie en fluorescence, où

l'intensité (I) de la lumière d'exposition provenant de l'objet à photographier (10) avant et après un premier processus d'exposition du matériel photographique (27) est mesurée au moyen d'un capteur de lumière (24), la première intensité ($I_1$) mesurée avant le premier processus d'exposition est utilisée pour l'obtention de la durée ($T_1$) du premier processus d'exposition, la seconde intensité ($I_2$) mesurée après le premier processus d'exposition est utilisée, avec la première intensité mesurée ($I_1$) et la durée ($T_1$) du premier processus d'exposition, pour l'obtention de la quantité de lumière par laquelle le matériel photographique a été sollicité dans le premier processus d'exposition et le cas échéant pour l'obtention de la durée ($T_2$) d'un second processus d'exposition, un miroir de changement de direction (23) est pivoté dans la marche des rayons (21) entre l'objet à photographier (10) et le matériel photographique (27) pour reproduire la lumière d'exposition de l'objet (10) dans le capteur de lumière (24) de façon que la totalité de l'intensité de la lumière de l'objet (10) soit utilisée au choix pour la mesure de l'intensité ou bien pour l'exposition du matériel photographique.

2. Procédé selon la revendication 1, où le second processus d'exposition ($T_2$) est déclenché quand le rapport ($I_2/I_1$) de la seconde intensité mesurée à la première intensité mesurée est compris entre 0,2 et 0,8.

3. Procédé selon la revendication 1, où pour le calcul des temps d'exposition ($T_1$, $T_2$), on considère l'indice d'écran noir du matériel photographique.

4. Dispositif pour le contrôle du temps d'exposition d'un matériel photographique dans un appareil pour la microphotographie en fluorescence se composant de

un obturateur (26) agencé dans la marche des rayons (21) entre l'objet (10) à photographier et le matériel photographique à exposer,

un capteur de lumière (24) et un miroir de changement de direction pouvant être pivoté dans la marche des rayons (21) entre l'objet (10) à photographier et l'obturateur (26) pour reproduire la lumière d'exposition de l'objet (10) dans le capteur de lumière (24) de façon que toute l'intensité de la lumière de l'objet (10) puisse être utilisée au choix pour la mesure de l'intensité par le capteur de lumière (24) ou pour l'exposition du matériel photographique, et

un processeur central (25) pour la lecture des intensités ($I_1$, $I_2$) mesurées par le capteur de lumière (24) pour le contrôle de l'obturateur (26) et de la position du miroir (23) de changement de direction et pour le calcul des temps d'exposition ($T_1$, $T_2$) selon le procédé de la revendication 1.

Fig. 1

Fig. 2